Europäisches Patentamt

European Patent Office

Office européen des brevets

(19)

(11) Publication number: **0 399 050**

**A1**

(12)

# EUROPEAN PATENT APPLICATION
## published in accordance with Art. 158(3) EPC

(21) Application number: **89913065.2**

(22) Date of filing: **27.11.89**

(86) International application number:
**PCT/JP89/01198**

(87) International publication number:
**WO 90/06204 (14.06.90 90/14)**

(51) Int. Cl.⁵: **B23K 1/00, B23K 1/19**

(30) Priority: **28.11.88 JP 298414/88**
**23.12.88 JP 323498/88**
**30.03.89 JP 180039/89**
**30.03.89 JP 180040/89**
**30.03.89 JP 180041/89**

(43) Date of publication of application:
**28.11.90 Bulletin 90/48**

(84) Designated Contracting States:
**DE FR GB IT SE**

(71) Applicant: **Furukawa Aluminum Co., Ltd.**
**6-1, 2-chome, Marunouchi Chiyoda-ku**
**Tokyo100(JP)**

(72) Inventor: **YAMAGUCHI, Motoyoshi**
**251, Kiyotaki Nakayasudomachi Nikko-shi**
**Tochigi 321-14(JP)**
Inventor: **KOYAMA, Hitoshi**
**4-10-6, Minamihatsutomi Kamagaya-shi**
**Chiba 273-01(JP)**

(74) Representative: **TER MEER - MÜLLER -**
**STEINMEISTER & PARTNER**
**Mauerkircherstrasse 45**
**D-8000 München 80(DE)**

(54) **GASEOUS PHASE BRAZING METHOD OF AI OR AI ALLOY.**

(57) This invention relates to a brazing method for bonding an assembly made of A1 or an A1 alloy, and more particularly to a gaseous phase brazing method which does not need the step of applying directly a flux to the assembly to be bonded. The present invention is characterized in that when A1 or an A1 alloy member is brazed through a brazing material, these members are brazed in a non-oxidizing atmosphere where a vapor of potassium fluoroaluminate complex exists. This vapor attaches in an extremely small quantity and uniformly to the assembly and destroys the A1 oxide film on the surface. Accordingly, it promotes wetting of the brazing material, causes the brazing material to flow uniformly and forms uniform fillets at the bonding portion of the assembly. Furthermore, the consumed amount of the flux is small and economical, brazabil-ity of an Mg-containing material can be improved and the surface of the bonded article after brazing is clean and beautiful.

SPECIFICATION

Vapor phase brazing method of Al or Al alloys

Technical fields

The present invention relates to a brazing method of Al or Al alloy components and, for example, in the production of heat-exchanger for cars etc., the invention improves the performance of brazed components and concurrently makes the production cost inexpensive.

Technical background

Usually, the brazing of Al or Al alloys is performed in a way that the Al or Al alloy components to be joined are fixed to construct an assembly intervening a brazing material, the melting point thereof being lower than that of these Al etc., and they are heated to a temperature higher than the melting point of this brazing material and lower than the melting point of Al or Al alloy components to be joined. As the brazing material, Al-Si type alloy is generally used and, as the form of use thereof, this alloy is used in a form of plate, wire or powder or in a form of combined material (hereinafter, described as brazing sheet), which is produced by covering a core material comprising Al or Al alloys with said brazing material.

As conventional brazing methods, flux brazing method using a flux for removing the oxidized film on the surface of components to be brazed and vacuum brazing method not using this are used commonly.

Among said flux brazing methods, there are in-furnace braz-

- 1 -

ing method, wherein the assembly to be joined is dipped into a chloride-based molten flux and then heated for brazing, etc. However, since this chloride-based flux is corrosive to Al, it must be removed completely by washing after brazing, which makes the production process very complicated.

On the contrary, the vacuum brazing method, wherein the assembly to be joined is placed in vacuum and heated for brazing, has advantages that the washing is unnecessary for post-process, that the surface of components after brazing is also good, and the like, but there are problems that high vacuum is needed, that the restriction exists materially, and the like.

Furthermore, in recent, as a brazing method for dissolving said inconveniences, a method to braze in furnace using fluoride-based flux has become to be used widely. As described in Japanese Patent Publication No. Sho 58-27037, this method uses a mixture of $KAlF_4$ with $K_3AlF_6$ is nonhygroscopic and noncorrosive to Al as a flux. This is suspended into water and coated onto the surface of assembly to be joined for brazing. As a feature thereof, the fact that the post-treatment for removing flux is unnecessary can be mentioned because of using noncorrosive flux.

In the method described in said Japanese Patent Publication No. Sho 58-27037, however, coating and drying processes for adhering the flux onto the surface of assembly is inevitably necessary and further the coated flux drops out most often from the assembly on the way to carry it to subsequent process

- 2 -

resulting in a low yield of effectively used flux. Moreover, since the residue of flux remains nonuniformly on the surface of joined components after brazing, the surface is more contaminated over the conventional vacuum brazing method leading to a lower commercial value. At the same time, because of the improved corrosion resistance, the chromate treatment, black-painting treatment, etc. to be carried out in subsequent processes end up to become nonuniform and the effect thereof becomes not to be exerted enough. These and others have been shortcomings.

Still more, since the residue of flux is nonelectroconductive, for example, when adopting the anticorrosion method for protecting the tube body through the sacrificial fin in heat-exchanger, the flow of anticorrosion current ends up to be hindered, thereby the anti-corrosion effect cannot be obtained enough in some times. Moreover, when in-furnace brazing the Al alloy components containing Mg by using said fluoride-based flux, the brazability is poorer over the conventional method. Hence, in order to achieve a stabilized brazability industrially, the content of Mg in Al alloys being brazing components must be under 0.6 wt. % (hereinafter, wt. % is abbreviated as % simply). With Al alloys containing more Mg than this level, the brazing ends up to become difficult, even if the coating level of flux may be increased. This cause is due to the reaction between Mg in Al alloys and flux during heating for brazing, and, as a result, such facts that the composition of flux changes to lose the effect as a flux, that Mg in Al alloys diffuses to the surface layer to increase the concentration of Mg in the surface layer, that the flow of brazing material is hindered through the occurrence of phenomena such as coming of flux into the surface layer of Al alloys etc., and the like take place.

As described, the fact that Al alloys with high content of Mg cannot be used as the materials for heat-exchanger has been a significant hindrance in the aspects of durability and lightening in weight of heat-exchanger.

Disclosure of the invention

As a result of extensive investigations in view of this situation, a brazing method of Al or Al alloys, wherein the coating work of flux is drastically decreased and yet the brazability is good, has been developed according to the invention.

Namely, the first embodiment of the invention is characterized in that, in the method of brazing Al or Al alloy components intervening a brazing material, without positively coating potassium fluoroaluminate complex onto the components to be brazed, these components are brazed in a nonoxidative atmosphere, the vapor of said complex existing therein.

The second embodiment of the invention is characterized in that, in the method of brazing Al or Al alloys intervening a brazing material, with coating potassium fluoroaluminate complex onto a part of the joining portions of components to be brazed and without coating potassium fluoroaluminate complex onto the other part, these components are brazed in a nonoxidative atmosphere, the vapor of said complex existing therein.

Moreover, the third embodiment of the invention is characterized in that, in the method of brazing Al or Al alloys intervening a brazing material, these components are brazed in a nonoxidative atmosphere, the vapor of potassium fluoroaluminate complex producible through the reaction of KF, one or not less than two kinds of fluorides and metallic Al existing therein. And, as the vapor of potassium fluoroaluminate complex to be produced in this case, one having $KAlF_4$ as a major ingredient is effective.

Furthermore, the fourth embodiment of the invention is characterized in that, in the method of brazing Al or Al alloys intervening a brazing material, the components to be brazed are brazed in a nonoxidative atmosphere, the vapor of potassium fluoroaluminate complex produced through the reaction of metallic complex containing K and F and further containing a metal except Al with metallic Al existing therein, and, as the vapor of sodium fluoroaluminate complex to be produced, one having $KAlF_4$ as a major ingredient is effective.

Still more, the fifth embodiment of the invention is characterized in that, in the method of brazing Al or Al alloys intervening a brazing material, these components are brazed in a nonoxidative atmosphere, the vapor generating from a melt of KF and $AlF_3$ existing therein.

As above, by placing the assembly as Al or Al alloy components to be joined in a nonoxidative atmosphere, in which the vapor of potassium fluoroaluminate complex in the first through the fourth of the invention aforementioned or the vapor of melt in the fifth of the invention, that is, the vapor of potassium fluoroaluminate complex mainly composed of $KAlF_4$ exists, this vapor adheres to the assembly in extremely small amount and in uniform state and destroys the oxidized film of Al on the surface thereof. Hence, the invention has such features that the wetting with brazing material is promoted, that the brazing material flows evenly and that the uniform fillet is formed at the joining point of assembly.

Further, this vapor combines with moisture and oxygen in the atmosphere to make the atmosphere more nonoxidative and thus has an effect to prevent the oxidation on the surface of materials.

For generating such vapor, said complex or raw materials of complex may be placed beforehand in a furnace for carrying out the brazing to evaporate simultaneously by the heat of furnace when raising the temperature thereof, or such methods that this vapor is generated outside the furnace and supplied into the furnace using nitrogen gas etc. as carriers, and the like are also possible.

Further, since it is possible to completely cover the assembly with vapor by allowing such vapor of potassium fluoroaluminate complex to exist in a nonoxidative atmosphere, the vapor density is settled only in small amount and the consumption of flux can be decreased. Besides, as the nonoxidative atmosphere, any atomosphere, for example, nitrogen, argon, carbon nonoxide or others can be utilized.

Moreover, for carrying out the invention, use of a highly closed furnace is preferable, but, even in a poorly closed furnace, the brazing can be made easily, if the assembly to be joined is placed in a vessel comprising stainless steel etc. together with the vapor-generating matter and heated for brazing.

Furthermore, in accordance with the invention, the brazing becomes possible even for Al-Mg type alloys containing Mg over 0.6 %. This is because of that the vapor of potassium fluoroaluminate complex is in extremely samll amount and yet it adheres uniformly to the assembly. For this reason, the reaction between the vapor of potassium fluoroaluminate complex to act as a flux and Mg in the materials becomes very slight, thus such functions that the effect of said vapor as a flux is not hindered, that the difference in concentration of Mg due to the diffusion of Mg into the surface layer of the Al alloy materials containing Mg is not caused in side the materials, that the flow of brazing material is not hindered because of minor amount of flux ingredient to penetrate into the surface layer of said materials, and the like can be achieved.

Besides, the brazing method of the invention is not a method to positively coat the flux onto the brazing components, but a method to allow the vapor of complex being the flux to act, so to speak, a vapor phase brazing method. If utilizing this method, it is also possible to adopt a method for the Al or Al alloy components having brazing portions difficult in brazing, wherein, after the flux was coated slightly onto said portions, the vapor phase brazing method being the invention is sued in combination.

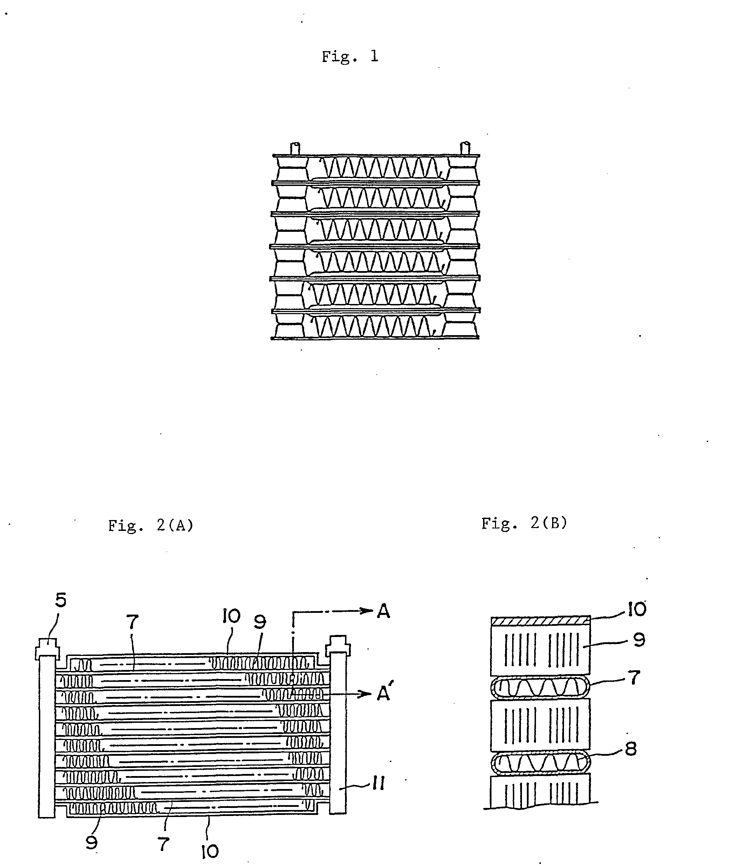

Namely, if utilizing the vapor of potassium fluoroaluminate complex etc., the brazing is possible without directly coating the potassium fluoroaluminate complex onto the assembly. However, for such assemblies having the joining portions where the vapor of potassium fluoroaluminate complex is difficult to exist from the structure thereof, for example, for the heat-exchangers having the joining portions also inside the assembly as the cases of drawn-cup type evaporator shown in Fig. 1, parallel-flow type condenser shown in Fig. 2, etc., the brazing inside them is generally difficult. There, in such cases, a method is effective, wherein the potassium fluoroaluminate complex is coated beforehand onto the joining portions inside the assembly and dried, and, without coating potassium fluor-aluminate complex onto the joining portions outside the assembly, the brazing is made in a nonoxidative atmosphere, the vapor of potassium fluoroaluminate complex etc. existing therein. Moreover, such partial coating of potassium fluoroaluminate complex is not confined to the inside of assembly, but, even onto the outside, the potassium fluoroaluminate complex may be coated partially and directly for use, when the brazing is difficult with the vapor alone of potassium fluoroaluminate complex because of, for example, complicated shape of joining portions.

Moreover, in the potassium fluoroaluminate complexes utilizable for the first or second brazing method of the invention, mixtures of compounds represented by a general formula $K_nAlF_{n+3}$ such as, in concrete chemical formulae, $KAlF_4$, $K_2AlF_5$,

$K_3AlF_6$, etc. that is $KAlF_4 + K_2AlF_5$, $KAlF_4 + K_3AlF_6$, $K_2AlF_5 + K_3AlF_6$ , $KAlF_4 + K_{n-1}AlF_{n+2}$ , $K_2AlF_5 + K_{n-2}AlF_{n+1}$, etc. are included and further the vapor generating from a mixture such as $KAlF_4 + K_2AlF_5 \cdot H_2O$ is also included.

Furhtermore, in the third emobidment of the invention, by heating for brazing, that is, by heating to about 600°C under conditions, KF, one or not less than two kinds of fluorides and metallic Al being allowed to coexist, these react and the vapor of potassium fluoroaluminate complex is to be produced. Besides, here, one or not less than two kinds of fluorides mean, for example, simple substances such as $ZrF_4$, $KBF_4$ LiF, $SnF_2$, etc. or mixtures such as $ZrF_4 + NaF$ etc. In addition, any one may be used if it produces the vapor of potassium fluoroaluminate complex by reacting with KF and Al and, in particular, one that produces the vapor of potassium fluoroaluminate complex having $KAlF_4$ as a major ingredient is preferable.

Moreover, the shape of Al to be used for such reactions may be any of plate, lump, etc., but it is the best to use fine powder with a particle size of not more than 100 μm being easy to react, if possible, and to react under heat after mixed with the mixtures aforementioned.

Moreover, the vapor of potassium fluoroaluminate complex in the fourth embodiment of the invention can be produced by allowing, as described above, a metallic complex containing K and F and further containing a metal except Al and metallic Al to coexist and by heating for brazing, that is, by heating to about 600°C.

Besides, as the metallic complexes containing K and F and further containing a metal except Al, there are, for example, $KBF_4$, $KZnF_3$, $K_2ZrF_6$, $K_2SiF_6$, etc. In addition, any one may be used if it produces the potassium fluoroaluminate complex by reacting with Al and, in particular, one that produces $KAlF_4$ is preferable.

Moreover, as the shape of Al to react with the metallic complex containing K and F and further containing a metal except Al, for example, Al powder may be used to submit for the brazing after mixed with said complex, or said complex may be placed on a Al plate to submit simultaneously for the brazing. But, more preferably, a method of mixing the fine powder with a particle size of not more than 100 µm with said complex for use is the best in order to make easy to react.

Furthermore, in the fifth embodiment of the invention, it is also possible to adopt a method of introducing the vapor generating by mixing solid KF with $AlF_3$ and melting them under heat, or the vapor of complex generating by melting these separately under heat into a nonoxidative atmosphere.

Brief description of the drawings

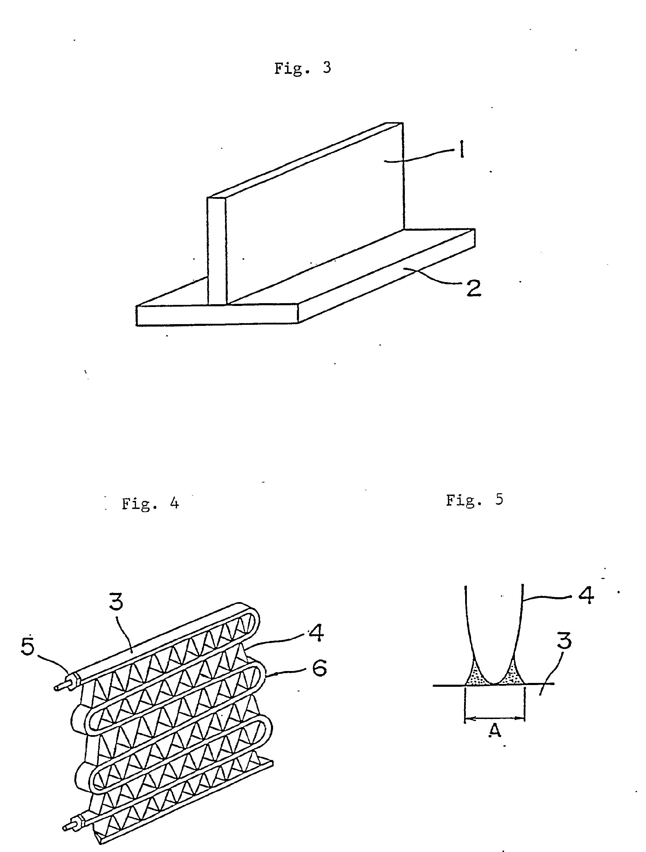

Fig. 1 is a side view showing the drawn-cup type evaporator, Fig. 2 (A) and (B) indicate the parallel-flow type condenser, wherein (A) is a side view and (B) is a cross section at AA' line, Fig. 3 is an oblique view showing a test piece of inverted T joint, Fig. 4 is an oblique view showing one example of serpentine type condenser being a heat-exchanger for air conditioner, and Fig. 5 is a side view magnified the fin portion in Fig. 4. Best embodiment for putting the invention into Practice.

[Example 1 and Comparative example 1]

< Example 1 >

As shown in Fig. 4, a tube material (3) made of JIS A1050 (Al: over 99.5 %), which was molded into tube by hot extrusion according to usual method, was bent in a serpentine shape, corrugate fins (4) comprising a brazing sheet with a thickness of 0.16 mm, the both sides of which were cladded with Al-10 % Si-1 % Zn alloy skin material making Al-1 % Mn-1 % Zn alloy as a core material, were inserted between these serpentine-shaped tube materials (3), further connectors (5) comprising Al-4 % Zn-1 % Mg alloy were attached and wire materials with a wire diameter of 1.6 mm comprisng JIS A4047 (Al-11 to 13 % Si alloy) were wound round these joined portions, thereby a condenser of serpentine type was constructed.

After degreased with organic solvent, this assembly was mounted on a stainless steel tray to be inserted into the brazing furnace together with 346 g of $KAlF_4$ per $m^3$ of inner volume of said brazing furnace. Then, this tray was inserted into the electric furnace, which had been displaced by a nitrogen gas atmosphere being at a dew point of -40°C and containing oxygen in a concentration of 100 ppm and retained at 610°C, and said assembly was heated for 5 minutes at 610°C to perform the

- 11 -

brazing.

At this time, $KAlF_4$ melts and evaporates during the time from having been inserted into the furnace to being raised to the brazing temperature and covers the assembly as an atmosphere at the time of brazing, thus it acts effectively as a flux.

Said condenser after the brazing was taken out from the furnace, then external appearance of surface was observed and situation of brazing was examined. These results are shown in Table 1 as the inventive method No. 1. Thereafter, the chromate treatment and the black painting were performed according to usual methods and the adherence thereof is put down together in Table 1 as a chromate processibility and a paintability, respectively. Moreover, in order to evaluate the corrosion resistance of this condenser after the painting, CASS test based on JIS H8681 was carried out for 500 hours and the existence of piercing pit corrosion was examined. These results are also put down together in Table 1.

< Comparative example 1 >

Next, for comparison, said condenser assembly shown in Fig. 4 was brazed by conventional method to investigate the characteristics thereof.

Namely, after degreased with organic solvent, 10 % in concentration of suspension of $KAlF_4$ were coated onto the assembly shown in Fig. 4 and dried for 10 minutes at 200°C. Thereafter, this assembly was inserted into the electric furnace, which had been displaced by a nitrogen gas atmosphere being at a dew point of -40°C and containing oxygen in a concentration of 100 ppm and retained at 610°C, and heated for 5 minutes at 610°C for brazing.

Subsequent processes were performed similarly to preceding Example 1 and this brazed condenser was tested for evaluation as above, the results of which are shown in Table 1 as the comparative method No. 1.

Table 1

| Brazing method | No. | External appearance of surface | Situation of brazing | | | Chromate processibility and paintability | Corrosin resistance |
|---|---|---|---|---|---|---|---|
| | | | Fin portion | | External appearance of connector portion | | |
| | | | Joining rate 1) (%) | Length of fillet 2) (mm) | | | |
| Invention method | 1 | Residue of flux can hardly be seen and surface is clean. | 100 | 1.35 | Good | Good (Adhered uniformly) | No generation of piercing pit corrosion |
| Comparative method | 1 | Residue of flux can be seen and yet it adheres nonuniformly. | 100 | 1.32 | Joining is Impossible. | No good (Adhered nonuniformly) | Generation of piercing pit corrosion |

Note 1) Joining rate (%) = [(Total number of peaks of fin-Number of unjoined peaks)/Total number of peaks of fin] x 100

Note 2) Length of fillet (mm) is a length shown by A in Fig. 5.

As evident from Table 1, the surface of the condenser after brazing according to the inventive method No. 1 was clean. As for the situation of brazing, too, both the fin portions being joined portions of fin to tube material and the connector portions being joined portions of connector to tube material were all excellent. Further, the chromate processibility and the paintability were good and the corrosion resistance was also good.

Whereas, with the condenser according to the comparative method No. 1, the residue of flux adhered thickly and nonuniformly over whole surfaces, which is not preferable from the external appearance. Moreover, as for the situation of brazing, fin portions were good, but connector portions were impossible to braze. Further, the chromate treatment and the paintability after the brazing were nonuniform and, as for the corrosion resistance, the piercing pit corrosion generated particularly at the curved portions (6) of tube material (3) shown in Fig. 4.

[Example 2 and comparative examples 2 and 3]

< Example 2 >

A parallel-flow type condenser as shown in Fig. 2 (A) and (B) was constructed using following components and brazed for joining by the inventive method. Namely, the parallel-flow type condenser was constructed in such a way that, into a seam-welded pipe (7), which was produced in a flat shape by molding a rolled plate with a thickness of 0.4 mm comprising a brazing sheet according to JIS BA11PC cladded one side with aluminum alloy brazing material containing 6.8 to 8.2 % of Si making JIS
A3003 (Al-0.05 to 0.20 % Cu-1.0 to 1.5 % Mn) aluminum alloy as
a core material after degreased beforehand with organic solvent
and the outside of which is cladded with brazing material, an
inner fin (8) with a thickness of 0.16 mm comprising a brazing
sheet according to JIS BA12PC cladded both sides with aluminum
alloy brazing material containing 6.8 to 8.2 % Si making JIS
A3003 aluminum alloy, onto which 10 % in concentration of
suspension of KA1F4 are coated and dried, as a core mateirial was
inserted, further, a plurality of such seam-welded pipes (7)
and a plurality of outer fins (9) comprising Al-0.15 % Cu-1.2 %
Mn-1 % Zn alloy and being processed in a corrugate shape were
superposed alternately, side plates (10) with a thickness of 1.2
mm comprising JIS BA11PC were disposed to the outside of outermost outer fins (9), pipes (11) with a thickness of 1.2 mm and
an outer diameter of 16 mm comprising JIS BA11PC cladded outside
with brazing material were connected to both sides of seam-
welded pipes (7), respectively, and connectors (5) comprising
Al-5.7 % Zn-1 % Mg alloy were attached to each end of said pipes
(11).

This assembly was mounted on a stainless steel, on which
500 g of KA1F4 per m$^3$ of inner volume of brazing furnace were
placed. And, this tray was inserted into the electric furnace,
which had been displaced by a nitrogen gas atmosphere being at
a dew point of -40°C and containing oxygen in a concentration
of 100 ppm and retained at 610°C, and said assembly was heated for 5 minutes at 610°C to perform the brazing. At this time, KAlF₄ melts and evaporates during the time from having been inserted into the furnace to being raised to the brazing temperature and covers the assembly as an atmosphere at the time of brazing, thus it acts effectively as a flux.

Said condenser after the brazing was taken out from the furnace then, external appearance of surface was obserbed and situation of brazing was examined. These results are shown in Table 2 as the inventive method No. 2. Thereafter, the chromate treatment and the black painting were performed according to usual methods and the adherence thereof is put down together in Table 2 as a chromate processibility and a paintability, respectively. Moreover, in order to evaluate the corrosion resistance of this condenser after the painting, CASS test based on JIS H8681 was carried out for 500 hours and the existence of piercing pit corrosion was examined. These results are also put down together in Table 2.

< Comparative examples 2 and 3 >

Next, for comparison, using same components as above, a parallel-flow type condenser constructed by inserting an inner fin (8) without KAlF₄ coated into a seam-welded pipe (7) was brazed under same conditions as those in preceding Example 2 and the observation of external appearance etc. were made. The results are put down together in Table 2 as the comparative method No. 2.

Further, for comparison, said assembly of condenser shown in Fig. 2 (A) and (B) was brazed by conventional method and the characteristics thereof were investigated. Namely, after degreased with organic solvent, this assembly was coated with 10 % in concentration of suspension of $KAlF_4$ and drying was made for 10 minutes at 200°C. This coating and drying processes with $KAlF_4$ suspension are necessary to be made twice on both inside and outside.

Thereafter, this assembly was inserted into the electric furnace, which had been displaced by a nitrogen gas atmosphere being at a dew point of -40°C and containing oxygen in a concentration of 100 ppm and retained at 610°C, and heated for 5 minutes at 610°C to perform the brazing. Of this brazed parallel-flow type condenser, similar eveluation tests as above were carried out, the results of which are put down together in Table 2 as the comparative method No. 3.

Table 2

| Brazing method | No. | External appearance of surface | Situation of brazing | | | Chromate processibility and paintability | Corrosion resistance |
| | | | Inside | Outside | | | |
| | | | Inner fin portion | Fin-pipe portion | Connector portion | | |
| Inventive method | 2 | Residue of flux can hardly be seen and surface is clean. | Good | Good | Good | Good (Adhered uniformly) | No generation of piercing pit corrosion |
| Comparative method | 2 | Residue of flux can hardly be seen and surface is clean | Joining is impossible | Good | Good | Good (Adhered uniformly) | No generation of piercing pit corrosion |
| " | 3 | Residue of flux can be seen and yet it adheres non-uniformly, thus dirty. | Good | Good | Joining is impossible. | No good (Adhered non-uniformly) | Generation of piercing pit corrosion |

As evident from Table 2, the surface of the condenser after the brazing according to the inventive method No. 2 was clean. As for the situation of brazing, too, all of the joined portions, that is, joined portions of outer fin to seam-welded pipe, joined portions of inner fin to seam-welded pipe, joined portions of seam-welded pipe to pipe, joined portions of Mg-containing connector to pipe, etc. were excellent in the brazability. Further, the chromate processibility and the paintability were also good and the corrosion resistance was also excellent.

Whereas, with the condenser according to the comparative method No. 2 inserted the inner fin without KAlF₄ coated into the seam-welded pipe, though the situation of brazing at the outside joined portions was good, the inside joining portions of inner fin could not be brazed.

Moreover, with the condenser according to the comparative method No. 3, the residue of flux adhered thickly and nonuniformly over whole surface, which is not preferable from the external appearance. As for the situation of brazing, almost all joined portions were good, but the joining portions of Mg-containing connector to pipe could not be brazed. Moreover, the chromate treatment and the painting after the brazing were nonuniform. As for the corrosion resistance, the piercing pit corrosion generated at the portions of pipe (11) shown in Fig. 2. [Examples 3 through 6 and Comparative examples 4 and 5]

< Examples 3 through 6 >

Test pieces of inverted T joint as shown in Fig. 3 were constructed, wherein one edge of rolled plate (1) with a thickness of 1 mm comprising a brazing sheet according to JIS BA12PC cladded one side of core material according to JIS A3003 Al alloy with JIS A4343 Al alloy brazing material containing 6.8 to 8.2 % of Si was contacted with the face of respective Al alloy plates (2) with a thickness of 1 mm, which are shown in Table 3, so that both plate materials (1) and (2) became to be perpendicular each other, and the brazing was carried out under following conditions to investigate the situation of brazing.

Namely, the test piece of inverted T joint in Fig. 3 was degreased with organic solvent and, after mixed a mixture of 32 % KF-68 % $ZrF_4$ with Al powder with an average particle size of 70 μm in equal amount, 500 g of said final mixture per $m^3$ of inner volume of brazing furnace were placed in this brazing furance. And, the inside of this furnace was displaced by a nitrogen gas atmosphere being at a dew point of -40°C and containing oxygen in a concentration of 100 ppm and further retained at 610°C. The assembly in Fig. 3 was then inserted into the furnace and heated for 5 minutes at 610°C to perform the brazing.

Thereafter, said joined product of inverted T joint after the brazing was taken out from the furnace and the situation of brazing was examined. The results are put down together in Table 3 as the inventive methods No. 3 through No. 6. Besides, in the table, mark◯indicates a good situation of brazing and mark X indicates a poor situation of brazing.

< Comparative examples 4 and 5 >

Also, as the comparative examples, said rolled plate (1) and Al alloy plates (2) shown by the comparative methods No. 4 and No. 5 in Table 3 were constructed to the test pieces of inverted T joint as shown in Fig. 3 according to the conventional method and degreased. Then, this assembly was coated with 10 % in concentration of $KAlF_4$ and dried. Thereafter, similarly to the preceding examples, this assembly was inserted into the electric furnace, which had been displaced by a nitrogen gas atmosphere being at a dew point of -40°C and containing oxygen in a concentration of 100 ppm and retained at 610°C, and heated for 5 minutes at 610°C to perform the brazing. The situation of brazing was investigated similarly and the results were put down together in Table 3.

Table 3

| Brazing method | No. | Al alloy plate | Brazability |
|---|---|---|---|
| Inventive method | 3 | JIS A1050 | ◯ |
| " | 4 | JIS A3003 | ◯ |
| " | 5 | Al - 0.7 % Mg | ◯ |
| " | 6 | Al - 1.0 % Mg | ◯ |
| Comparative method | 4 | JIS A1050 | ◯ |
| " | 5 | Al - 1.0 % Mg | X |

As can be seen from Table 3, in the cases of the inventive methods No. 3 through No. 6, the brazability was good in all cases and, in particular, good brazing was possible even with the Mg-containing materials. Whereas, with Al-1.0 % Mg material of the comparative method No. 5, the brazing was impossible.

[Example 7 and Comparative example 6]

< Example 7 >

As shown in Fig. 4, a tube material (3) made of JIS A1050, which was molded into tube by hot extrusion according to usual method, was bent in a serpentine shape, corrugate fins (4) comprising a brazing sheet with a thickness of 0.16 mm, the both sides of which were cladded with Al-10 % Si-1 % Zn alloy skin material making Al-1 % Mn-1 % Zn alloy as a core material, were inserted between these serpentin-shaped tube materials(3), and further connectors (5) comprising Al-4.3 % Zn-1.3 % Mg alloy were attached, thereby a condenser of serpentine type was constructed. Besides, these joining portions of currugate fin (4) to connectors (5) had been joined beforehand by TIG welding using a welding rod according to JIS A1070 (Al: over 99.70 %).

Next, after degreased this assembly with organic solvent, 500 g in total of equal mols of KF and $AlF_3$ per $m^3$ of inner volume of brazing furnace were placed in the electric furnace for brazing. Said assembly was inserted into this electric furnace, which had been displaced by nitrogen gas being at a dew point of -40°C and containing oxygen in a concentration of 100 ppm and retained at 610°C, and heated for 5 minutes at 610°C to perform the brazing.

Said condenser after the brazing was taken out, then, external appearance of surface was observed and situation of

- 23 -

brazing was examined. These results are shown in Table 4. Thereafter, the chromate treatment and the black painting were performed according to usual methods and the adherence of these films is put down together in Table 4 as a chromate processibility and a paintability, respectively. Moreover, in order to evaluate the corrosion resistance of this condenser after the painting, CASS test based on JIS H8681 was carried out for 500 hours and the existence of piercing pit corrosion was examined. These results are also put down together in Table 4 as the inventive method No. 7.

< Comparative example 6 >

Further, for comparison, said assembly of serpentine type condenser shown in Fig. 4 was brazed by conventional method shown in Comparative example 1. Of this, similar evaluation tests as above were carried out and the results are shown in Table 4 as the comparative method No. 6.

Table 4

| Brazing method | No. | External appearance of surface | Situation of brazing at fin portion | | Chromate processibility and paintability | Corrosion resistance |
|---|---|---|---|---|---|---|
| | | | Joining rate 1) (%) | Length of fillet 2) (mm) | | |
| Inventive method | 7 | Residue of flux can hardly be seen and surface is clean. | 100 | 1.35 | Good (Adhered uniformly) | No generation of piercing pit corrosion |
| Comparative method | 6 | Residue of flux can be seen and yet it adheres nonuniformly, thus dirty. | 100 | 1.35 | No good (Adhered nonuniformly) | Generation of piercing pit corrosion |

Note 1)   Joining rate (%) = [(Total number of peaks of fin-Number of unjoined peaks)/Total number of peaks of fin] x 100

Note 2)   Length of fillet (mm) is a length should by A in Fig. 5.

EP 0 399 050 A1

As evident from Table 4, the surface of the condenser after the brazing according to the inventive method No. 7 was clean and the situation of brazing was also good. Further, the chromate processibility and the paintability were also good and the corrosion resistance was also good.

Whereas, with the condenser according to the comparative method No. 6, the residue of flux adhered thickly and nonuniformly over whole surface, which is not preferable from the external appearance. Moreover, though the situation of brazing was good, the chromate treatment and the painting after the brazing were nonuniform. As for the corrosion resistance, the piercing pit corrosion generated at the curved portions (6) of tube material (3) shown in Fig. 4.

[Examples 8 through 11 and Comparative examples 7 and 8]

< Examples 8 through 11 >

As shown in Fig. 3, test pieces of inverted T joint were constructed, wherein one edge of rolled plate (1) with a thickness of 1 mm comprising a brazing sheet according to preceding JIS BA12PC was contacted with the face of respective rolled plates (2) with a thickness of 1 mm, which are shown in Table 5, so that both plate materials (1) and (2) became to be perpendicular each other, and the brazing was carried out under following conditions to investigate the situation of brazing.

Namely, after the test piece of inverted T joint shown in Fig. 3 was degreased with organic solvent and a mixture of 250 g of $KBF_4$ with same 250 g Al powder with an average particle size

of 70 μm per m³ of inner volume of brazing furnace was placed in this electric furnace for brazing, the inside of this furnace was displaced by a nitrogen gas atmosphere being at a dew point of -40°C and containing oxygen in a concentration of 100 ppm and further retained at 610°C. Into this furnace, said assembly shown in Fig. 3 was inserted and heated for 5 minutes at 610°C to perform the brazing.

Thereafter, said joined product of inverted T joint after the brazing was taken out from the furnace and the situation of brazing was examined. The results are put down together in Table 5 as the inventive methods No. 8 through No. 11. Besides, in the table, mark◯ indicates a good situation of brazing and mark χ indicates a poor situation of brazing.

< Comparative examples 7 and 8 >

Also, as the comparative examples, said rolled plate (1) and Al alloy plates (2) shown by the comparative methods No. 7 and No. 8 in Table 5 were constructed to the test pieces of inverted T joint as shown in Fig. 3. Then, the brazing was carried out by the similar method to comparative examples 4 and 5 and the situation of brazing was investigated similarly to preceding examples, the results of which are put down together in Table 5.

Table 5

| Brazing method | No. | Al alloy | Brazability |
|---|---|---|---|
| Inventive method | 8 | JIS A1050 | ◯ |
| " | 9 | JIS A3003 | ◯ |
| " | 10 | Al - 0.7 % Mg | ◯ |
| " | 11 | Al - 1.0 % Mg | ◯ |
| Comparative method | 7 | JIS A1050 | ◯ |
| " | 8 | Al - 1.0 % Mg | X |

As can be seen from Table 5, in the cases of the inventive methods No. 8 through No. 11, the brazability was good in all cases and, in particular, good brazing was possible even with the Mg-containing materials. Whereas, with Al-1.0% Mg material of the comparative method No. 8, the brazing was impossible.

[Example 12 and Comparative example 9]

< Example 12 >

Similarly to Example 7, a condenser of serpentine type as shown in Fig. 4 was constructed. Besides, the joining portions of corrugate fin (4) to connector (5) had been joined beforehand, similarly to Example 7, by TIG welding using a welding rod according to JIS A1070.

Next, after degreased this assembly with organic solvent, a mixture of 250 g of $KZnF_3$ with same 250 g of Al powder with an average particle diameter of 70 μm per $m^3$ of inner volume of brazing furnace was placed in the electric furnace for brazing. Said assembly, was inserted into the electric furnace, which had been displaced by a nitrogen gas atmosphere being at a dew point of -40°C and containing oxygen in a concentration of 100 ppm and retained at 610°C, and heated for 5 minutes at 610°C to perform the brazing.

Said condenser after the brazing was taken out from the furnace, then, external appearance of surface was observed and situation of brazing was examined. These results are shown in Table 6 as the inventive method No. 12. Thereafter, the chromate treatment and the black painting were performed according to usual methods and the adherence of these films is shown in Table 6 as a chromate processibility and a paintability, respectively. Moreover, in order to evaluate the corrosion resistance of this condenser after the painting, CASS test based on JIS H8681 was carried out for 500 hours and the existence of piercing pit corrosion was examined. These results are also put down together in Table 6.

< Comparative example 9 >

Further, for comparison, said assembly of serpentine type condenser shown in Fig. 4 was brazed by conventional method shown in Comparative example 1. Of this, similar evaluation tests as above were carried out and the results are shown in Table 6 as the comparative method No. 9.

Table 6

| Brazing method | No. | External appearance of surface | Situation of brazing at fin portion | | Chromate processibility and paintability | Corrosion resistance |
|---|---|---|---|---|---|---|
| | | | Joining rate 1) (%) | Length of fillet 2) (mm) | | |
| Inventive method | 12 | Residue of flux can hardly be seen and surface is clean. | 100 | 1.37 | Good (Adhered uniformly) | No generation of piercing pit corrosion |
| Comparative method | 9 | Residue of flux can be seen and yet it adheres nonuniformly, thus dirty. | 100 | 1.38 | No good (Adhered nonuniformly) | Generation of piercing pit corrosion |

Note 1)   Joining rate (%) = [(Total number of peaks of fin-Number of unjoined peaks)/Total number of peaks of fin] x 100

Note 2)   Length of fillet (mm) is a length shown by A in Fig. 5.

As evident from Table 6, the surface of the condenser after the brazing according to the inventive method No. 12 was clean and the situation of brazing was also good. Further, the chromate processibility and the paintability were also good and the corrosion resistance was also good.

Whereas, with the condenser according to the comparative method No. 9, the residue of flux adhered thickly and nonuniformly over whole surface, which is not preferable from the external appearance. Moreover, though the situation of brazing was good, the chromate treatment and the painting after the brazing were nonuniform. As for the corrosion resistance, the piercing pit corrosion generated at the curved portions (6) of tube material (3) shown in Fig. 4.

[Examples 13 through 16 and Comparative examples 11 and 12]

< Examples 13 through 16 >

As shown in Fig. 3, test pieces of inverted T joint were constructed, wherein one edge of rolled plate (1) with a thickness of 1 mm comprising a brazing sheet according to preceding JIS BA12PC was contacted with the face of respective rolled plates (2) with a thickness of 1 mm, which are shown in Table 7, so that both plate materials (1) and (2) became to be perpendicular each other, and the brazing was carried out under following conditions to investigate the situation of brazing.

Namely, after the test piece of inverted T joint shown in Fig. 3 was degreased with organic solvent and 500 g of equal mols of KF and $AlF_3$ per $m^3$ of inner volume of brazing furnace were placed in this electric furnace for brazing, the inside of this furnace was displaced by a nitrogen gas atmosphere being at a dew point of -40°C and containing oxygen in a concentration of 100 ppm and further retained at 610°C. Into this furnace, the assembly in Fig. 3 was inserted and heated for 5 minutes at 610°C to perform the brazing.

Thereafter, said joined product of inverted T joint after the brazing was taken out from the furnace and the situation of brazing was examined. The results are put down together in Table 7 as the inventive methods No. 13 through No. 16. Besides, in the table, mark ◯ indicates a good situation of brazing and mark X indicates a poor situation of brazing.

< Comparative examples 11 and 12 >

Also, as the comparative examples, said rolled plate (1) and Al alloy plates (2) shown by the comparative methods No. 11 and No. 12 in Table 7 were constructed to the test pieces of inverted T joint as shown in Fig. 3. Then, the brazing was carried out by the similar method to comparative examples 4 and 5 and the situation of brazing was investigated similarly to preceding examples, the results of which are put down together in Table 7.

Table 7

| Brazing method | No. | Al alloy | Brazability |
|---|---|---|---|
| Inventive method | 13 | JIS A1050 | ◯ |
| " | 14 | JIS A3003 | ◯ |
| " | 15 | Al - 0.7% Mg | ◯ |
| " | 16 | Al - 1.0% Mg | ◯ |
| Comparative method | 11 | JIS A1050 | ◯ |
| " | 12 | Al - 1.0% Mg | X |

As can be seen from Table 7, in the cases of the inventive methods No. 13 through No. 16, the brazability was good in all cases and, in particular, good brazing was possible even with the Mg-containing materials. Whereas, with Al-1.0 % Mg material of the comparative method No. 12, the brazing was impossible.

[Example 17 and Comparative example 13]

< Example 17 >

Similarly to Example 7, a condenser of serpentine type as shown in Fig. 4 was constructed. Besides, the joining portions of corrugate fin (4) to connector (5) had been joined beforehand, similarly to Example 7, by TIG welding using a welding rod according to JIS A1070.

Next, after degreased this assembly with organic solvent, 500 g of equalmols of KF and $AlF_3$ per $m^3$ of inner volume of brazing furnace were placed in the electric furnace for brazing. Said assembly was inserted into the electric furnace, which had been displaced by a nitrogen gas atmosphere being at a dew point of -40°C and containing oxygen in a concentration of 100 ppm and retained at 610°C, and heated for 5 minutes at 610°C to perform the brazing.

Said condenser after the brazing was taken out from the furnace, then, external appearance of surface was observed and situation of brazing was examined. These results are shown in Table 8 as the inventive method No. 17. Thereafter, the chromate treatment and the black painting were performed according to usual methods and the adherence of these films is put down together in Table 8 as a chromate processibility and a paintability, respectively. Moreover, in order to evaluate the corrosion resistance of this condenser after the painting, CASS test based on JIS H8681 was carried out for 500 hours and the existence of piercing pit corrosion was examined. These results are also put down together in Table 8.

< Comparative example 13 >

Further, for comparison, said assembly of serpentine type condenser shown in Fig. 4 was brazed by conventional method shown in Comparative example 1. Of this, similar evaluation tests as above were carried out and the results are shown in Table 8 as the comparative method No. 13.

Table 8

| Brazing method | No. | External appearance of surface | Situation of brazing at fin portion | | Chromate processibility and paintability | Corrosion resistance |
|---|---|---|---|---|---|---|
| | | | Joining rate 1) (%) | Length of fillet 2) (mm) | | |
| Inventive method | 17 | Residue of flux can hardly be seen and surface is clean. | 100 | 1.35 | Good (Adhered uniformly) | No generation of piercing pit corrosion |
| Comparative method | 13 | Residue of flux can be seen and yet it adheres nonuniformly, thus dirty. | 100 | 1.32 | No good (Adhered nonuniformly) | Generation of percing pit corrosion |

Note 1)  Joining rate (%) = [(Total number of peaks of fin-Number of unjoined peask)/Total number of peaks of fin] x 100

Note 2)  Length of fillet (mm) is a length shown by A in Fig. 5.

EP 0 399 050 A1

As evident from Table 8, the surface of the condenser after the brazing according to the inventive method No. 17 was clean and the situation of brazing was also good. Further, the chromate processibility and the paintability were also good and the corrosion resistance was also good.

Whereas, with the condenser according to the comparative method No. 13, the residue of flux adhered thickly and nonuniformly over whole surface; which is not preferable from the external appearance. Moreover, though the situation of brazing was good, the chromate treatment and the painting after the brazing were nonuniform. As for the corrosion resistance, the piercing pit corrosion generated at the curved portion (6) of tube material (3) shown in Fig. 4.

Utilizability in the industry

As described above, in accordance with the invention, the production cost of, for example, heat-exchanger for cars etc. becomes more inexpensive over the conventional brazing method because of shortening of production process, the surface processibility in the post-treatments such as chromate treatment etc. is good because of clean surface of components after the brazing, the qualities such as being excellent in the corrosion resistance etc. are enhanced, and further the brazing of alloys containing much Mg is also possible. For these reasons and others, the invention exerts conspicuous effects industrially.

Scope of the claim

1.  A vapor phase brazing method of Al or Al alloys characterized in that, in the method of brazing Al or Al alloys intervening a brazing material, without positively coating potassium fluoroaluminate complex onto the components to be brazed, these components are brazed in a nonoxidative atmosphere, the vapor of said complex existing therein.

2.  A brazing method of Al or Al alloys characterized in that, in the method of brazing Al or Al alloys intervening a brazing material, with coating potassium fluoroaluminate complex onto a part of the joining portions of components to be brazed and without coating potassium fluoroaluminate complex onto the other part, these components are brazed in a nonoxidative atmosphere, the vapor of said complex existing therein.

3.  A brazing method of Al or Al alloys characterized in that, in the method of brazing Al or Al alloys intefvening a brazing material, these components are brazed in a nonoxidative atmosphere, the vapor of potassium fluoroaluminate complex producible through the reaction of KF, one or not less than two kinds of fluorides and mettalic Al existing therein.

4.  The brazing method of Al or Al alloys according to Claim 3, wherein the vapor of potassium fluoroaluminate complex to be produced has $KAlF_4$ as a major ingredient.

5.  A vapor phase brazing method of Al or Al alloys characterized in that, in the method of brazing Al or Al alloys intervening a brazing material, the components to be brazed are brazed in a nonoxidative atmosphere, the vapor of potassium fluoroaluminate complex produced through the reaction of metallic complex containing K and F and further containing a metal except Al with metallic Al existing therein.

6. The brazing method of Al or Al alloys according to Claim 5, wherein the vapor of sodium fluoroaluminate complex to be produced has $KAlF_4$ as a major ingredient.

7. A vapor phase brazing method of Al or Al alloys characterized in that, in the method of brazing Al or Al alloys intervening a brazing material, these components are brazed in a nonoxidative atmosphere, the vapor generating from a melt of KF and $AlF_3$ existing therein.

Fig. 1

Fig. 2(A)

Fig. 2(B)

Fig. 3

Fig. 4

Fig. 5

# INTERNATIONAL SEARCH REPORT

International Application No  PCT/JP89/01198

## I. CLASSIFICATION OF SUBJECT MATTER (if several classification symbols apply, indicate all) 6

According to International Patent Classification (IPC) or to both National Classification and IPC

Int. Cl$^5$    B23K1/00, 1/19

## II. FIELDS SEARCHED

### Minimum Documentation Searched 7

| Classification System | Classification Symbols |
|---|---|
| IPC | B23K1/00, 1/19, 31/02 |

### Documentation Searched other than Minimum Documentation to the Extent that such Documents are Included in the Fields Searched 8

| | |
|---|---|
| Jitsuyo Shinan Koho | 1926 – 1988 |
| Kokai Jitsuyo Shinan Koho | 1971 – 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 58-202996 (Hitachi, Ltd.), 26 November 1983 (26. 11. 83), Page 1, lower right column, line 17 to page 3, lower right column, line 9 (Family: none) | 1 – 7 |
| A | JP, A, 56-4397 (Kawakatsu Ichiro) 17 January 1981 (17. 01. 81), Page 1, lower right column, lines 8 to 16 (Family: none) | 1 – 7 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| January 20, 1990 (20. 01. 90) | February 13, 1990 (13. 02. 90) |

| International Searching Authority | Signature of Authorized Officer |
|---|---|
| Japanese Patent Office | |

Form PCT/ISA/210 (second sheet) (January 1985)